# FASCICULE DE BREVET EUROPEEN

(11) **EP 2 665 368 B1**
(45) Date de publication et mention de la délivrance du brevet: **07.01.2015**
(21) Numéro de dépôt: 11811081.6
(22) Date de dépôt: 12.12.2011
(51) Int. Cl.: A23G 3/20, A23G 3/22, A23G 7/00, B65G 47/66

(54) **DISPOSITIF D'ENTRAÎNEMENT D'UN SUPPORT DESTINÉ À TRANSPORTER DES CONFISERIES À BASE DE CHOCOLAT**
VORRICHTUNG ZUM BEWEGEN VON HALTERN ZUM TRANSPORT VON SCHOKOLADEFÖRMIGEN SÜSSWAREN
DEVICE FOR PROPELLING A SUPPORT FOR TRANSPORTING CHOCOLATE BASED CONFECTIONERIES

(30) Priorité: 20.01.2011 FR 1150452
(43) Date de publication de la demande: 27.11.2013
(73) Titulaire: SEBSA, 78540 Vernouillet (FR)
(72) Inventeur: GOISEAU, Didier, F-78540 Vernouillet (FR)
(74) Mandataire: Zimmermann, Alain
(86) Numéro de dépôt international: PCT/FR2011/052939
(87) Numéro de publication internationale: WO 2012/098304

(56) Documents cités:
- DE-A1- 2 503 292
- FR-A1- 2 625 986
- US-A- 1 672 522
- US-A- 2 443 868

## Description

La présente invention concerne un dispositif d'entraînement et de déplacement d'un support plan flexible de faible épaisseur destinée à récupérer et transporter des confiseries à base de chocolat sorties d'une installation d'enrobage.

Il existe actuellement différentes façons de récupérer et transporter sur un support plan de faible épaisseur des confiseries fraîchement enrobées, par exemple des chocolats qui sortent d'une machine d'enrobage.

Le plus souvent, les chocolats transitent dans la machine d'enrobage à l'aide de transporteurs sans fin tels que des tapis métalliques ajourés (typiquement une série de tiges parallèles décrivant un mouvement cyclique) sous le dispositif d'enrobage de chocolat et arrivent sur un support plan flexible de faible épaisseur qui est entraîné en translation.

Selon une première solution, plusieurs supports plans amovibles, tel que des bandes, sont déplacés successivement par un dispositif d'entraînement comportant deux chaînes parallèles montées sur un châssis et tournant sans fin de manière cyclique à l'aide de roues crantées. Chaque support plan amovible est accroché aux chaînes par l'intermédiaire d'une tige transversale se logeant dans des plots,munies d'une fente de réception. Les plots sont solidaires des chaînes et se déplacent parallèlement l'un à l'autre de manière synchronisée à l'aide des chaînes d'entraînement. Un tel dispositif est décrit dans le brevet FR 2 625 986. Une fois que le support a parcouru une certaine distance (déterminée par le déplacement en parallèle des chaînes), un technicien arrête la rotation des chaînes, glisse une fine tôle rigide sous le support (si celle-ci n'a pas été glissée auparavant) et soulève l'ensemble pour le placer par exemple sur une échelle pour le séchage et le durcissement de l'enrobage en chocolat.

Selon une seconde solution, le support plan flexible de faible épaisseur est un papier paraffiné, de même largeur que les tapis métalliques, enroulé sur un rouleau et entraîné par une bande mobile sans fin. Pour cela, un poids est posé sur l'amorce du papier avant que les chocolats arrivent, ce qui permet à la bande mobile d'entrainer ledit papier. Le technicien glisse également une fine tôle rigide sous le papier, qu'il aura préalablement coupé au niveau du début de la bande d'entraînement, et soulève alors l'ensemble pour le placer sur une échelle comme précédemment.

Dans les différents cas présentés, l'entraînement du support de faible épaisseur est délicat. Le papier peut par exemple être mal guidé, partir de travers, se détériorer. De plus, l'action de glisser la tôle rigide sous le support plan de faible épaisseur (papier ou bande) risque d'abîmer les chocolats suite à un choc avec ladite tôle, ou de les renverser.

Par conséquent, ces solutions de l'art antérieur ne donnent pas entièrement satisfaction.

Un but de la présente invention est donc de résoudre les problèmes cités précédemment, à l'aide d'une solution simple à fabriquer, peu coûteuse, facile à utiliser et optimisée en termes d'efficacité.

Ainsi, la présente invention a pour objet un dispositif d'entraînement et de déplacement d'un support plan flexible de faible épaisseur destiné à récupérer et transporter des confiseries à base de chocolat sorties d'une installation d'enrobage, ledit dispositif comportant un châssis de réception d'une tôle rigide amovible, et des moyens pour entraîner le support plan de faible épaisseur en translation au-dessus de ladite tôle, caractérisé en ce que :
- lesdits moyens d'entraînement comportent deux courroies sans fin parallèles entre elles et disposées latéralement sur le châssis, lesdites courroies présentant chacune un bord intérieur et un bord extérieur,
- la tôle présente une largeur inférieure à la distance séparant les bords intérieurs des courroies, de manière à pouvoir être placée entre ces dernières, et
- le support plan de faible épaisseur présente une largeur constante sensiblement égale à la distance séparant les bords extérieurs des courroies et supérieure à la distance séparant leurs bords intérieurs, de sorte que ledit support reste en contact en permanence avec lesdites courroies qui entraînent ce dernier pour le déplacer longitudinalement le long du châssis.

Selon des modes de réalisation préférés, le dispositif conforme à la présente invention comprend l'une au moins des caractéristiques suivantes :
- le support plan de faible épaisseur est une feuille de papier enroulée autour d'un rouleau accroché sous le châssis et tournant à la même vitesse que les courroies, en synchronisation avec celles-ci ;
- les courroies sont crantés sur leur face interne respective et montées chacune sur deux engrenages de tension et d'entraînement solidaires chacun de deux axes parallèles s'étendant transversalement au châssis et à la direction longitudinale de déplacement du support plan de faible épaisseur ;
- la tôle présente une poignée pour son positionnement entre les courroies et son retrait avec une portion de support plan de faible épaisseur découpé et recouvert de confiseries enrobées ;
- le dispositif comporte des montants transversaux s'étendant transversalement au châssis pour supporter la tôle ;
- le dispositif est également pourvu d'un moyen exerçant une pression sur le support plan de faible épaisseur pour presser ce dernier sur les courroies durant tout son déplacement ;
- le moyen de pression est constitué par un poids posé directement sur le support plan de faible épaisseur et présentant une longueur au moins égale à la distance séparant les bords extérieurs des courroies ;
- le moyen de pression comporte deux galets presseurs surplombant chacun une courroie et reliés respectivement à un moyen de mise sous contrainte tel qu'un ressort de compression ; et
- les galets sont montés chacun sur un support vertical et sont articulés par rapport à ce dernier pour passer d'une position relevée sans contact avec le support plan de faible épaisseur à une position abaissée pour prendre ledit support en sandwich avec la courroie correspondante.

La présente invention se rapporte également à une machine pour l'enrobage de confiseries à base de chocolat comportant un dispositif d'entraînement d'un support plan de faible épaisseur tel que décrit précédemment.

L'invention va maintenant être décrite plus en détail en référence à des modes de réalisation particuliers donnés à titre d'illustration uniquement et représentés sur les figures annexées dans lesquelles :
- La figure 1 est une vue en perspective d'une machine d'enrobage de confiserie à base de chocolat comportant un dispositif d'entraînement et de transport conforme à la présente invention ;
- La figure 2 est une vue de dessus de la figure 1 ;
- La figure 3 est une vue de côté de la figure 2 ;

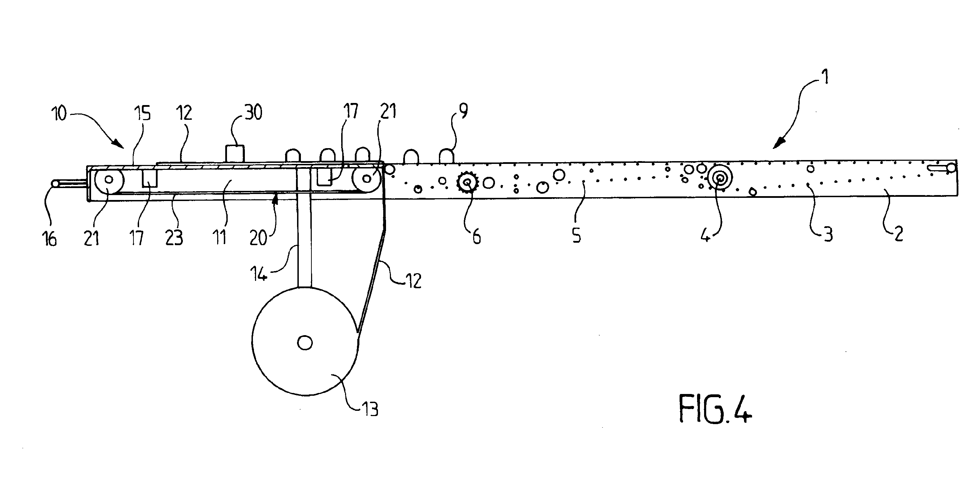

- La figure 4 est une vue en coupe longitudinale selon la ligne AA de la figure 2 ;
- La figure 5 est une vue en coupe transversale selon la ligne BB de la figure 2 ;
- Les figures 6 à 8 sont des vues de détail d'une variante de réalisation d'un moyen de pression du dispositif d'entraînement de la présente invention.

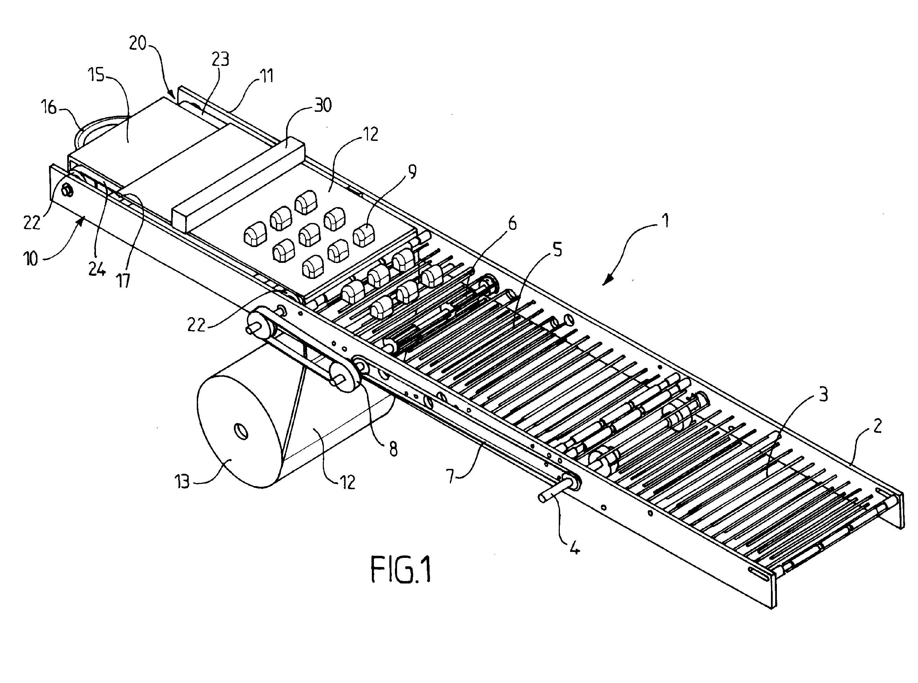

La figure 1 représente une machine 1 pour l'enrobage de confiseries à base de chocolat 9, par exemple des bonbons à coeur en praliné, ganache ou pâte d'amande.

Cette machine 1 comprend typiquement un châssis à base de premiers longerons 2 parallèles supportant deux transporteurs plans ajourés respectivement d'entrée 3 et d'enrobage 5. Ces transporteurs sont constitués chacun par une succession de tiges transversales métalliques parallèlement espacées entraînées cycliquement en translation par deux arbres rotatifs 4 et 6 mis en mouvement de manière synchronisée par un premier entraînement à chaîne 7 relié à un second entraînement à courroie 8.

Les bonbons sont posés manuellement sur le premier transporteur 3 puis passent sous un voile de chocolat (non représenté) avant d'être transportés par le second transporteur 5 (ou simultanément à l'enrobage).

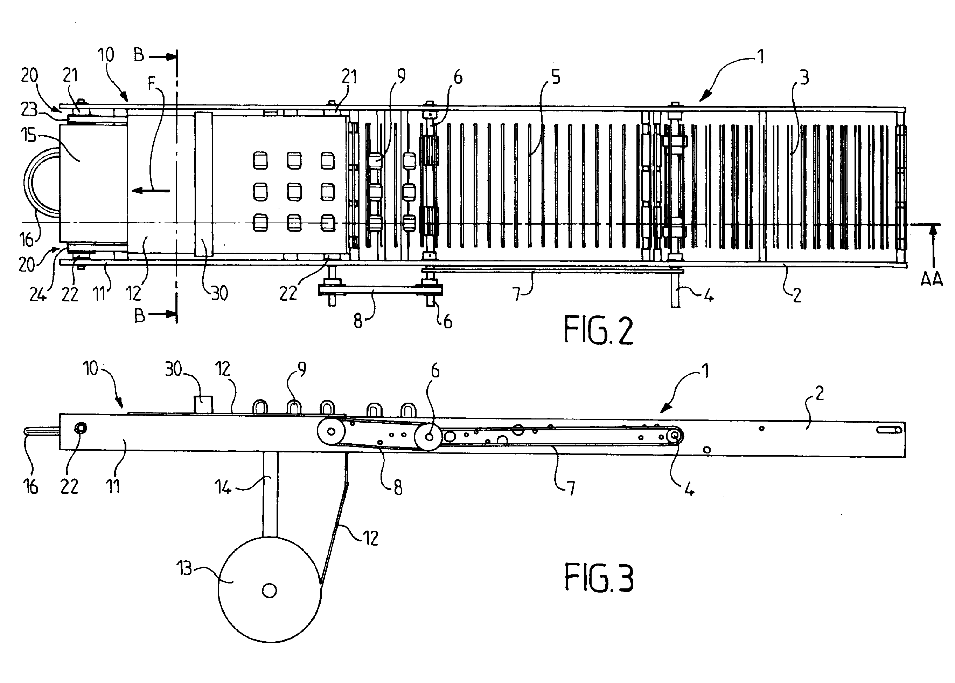

La machine 1 comporte également un dispositif 10 d'entraînement et de transport (appelé également « système de reprise ») des chocolats selon la flèche F de la figure 2 une fois ceux-ci enrobés, c'est-à-dire en sortie du transporteur d'enrobage 5.

Ce dispositif 10 comporte un châssis constitué notamment de seconds longerons 11 parallèles disposés dans le prolongement des premiers logerons 2. Ce châssis 11 supporte un pilier vertical 14 inférieur soutenant un rouleau 13 de papier paraffiné 12. Il est en outre muni de moyens d'entraînement par tirage 20 dudit papier.

Le dispositif est également pourvu de deux montants transversaux 17 supportant une fine tôle rigide 15 munie d'une poignée 16, ladite tôle étant placée sous le papier 12 pour servir de plateau de support aux chocolats enrobés pour leur séchage/refroidissement/durcissement. Les deux montants 17 supportent également deux rails qui sont placés sous les courroies pour éviter qu'elles fléchissent.

Les moyens d'entraînement 20 comportent quant à eux deux paires d'engrenages de tension et d'entraînement 21 et 22 solidaires chacun de deux axes parallèles s'étendant transversalement au châssis et sur lesquels sont tendues respectivement deux courroies crantées de transport 23 et 24. A titre d'exemple, les courroies mesurent chacune environ 10 mm de largeur entre leurs bords intérieurs 23a/24a et extérieurs 23b/24b.

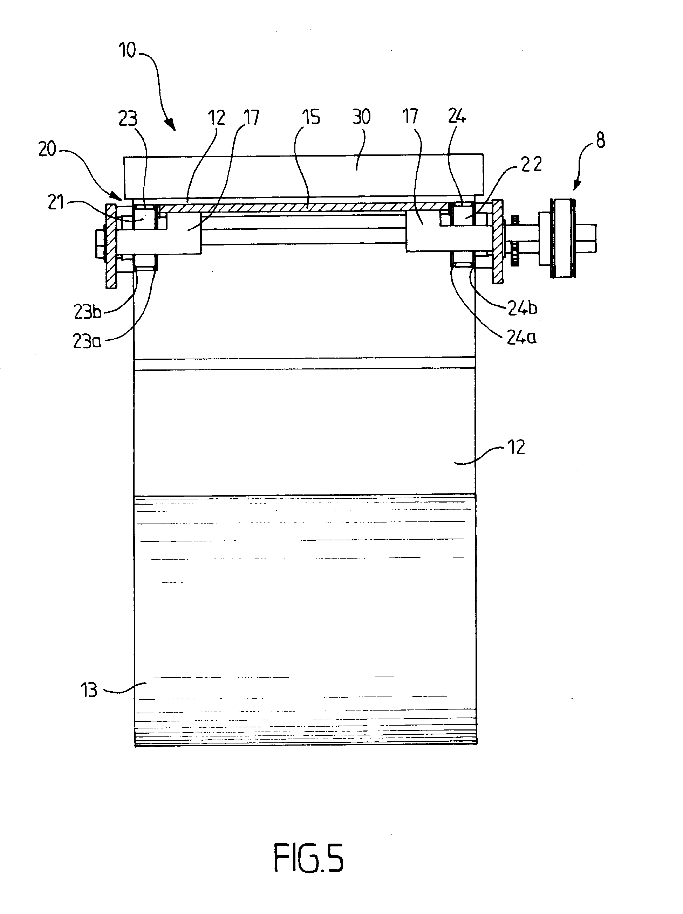

Comme cela est visible sur la figure 5, le papier 12 présente une largeur constante sensiblement identique à la distance séparant les bords extérieurs 23b/24b des courroies 23 et 24, tandis que la tôle 15 présente une largeur inférieure à la distance séparant les bords intérieurs 23a/24a desdites courroies. A titre d'exemple, avec des courroies 23 et 24 de 10 mm de largeur, le papier mesure 220 mm de largeur et la tôle 15 environ 180 mm.

Ainsi, seul le papier 12 est entraîné par les courroies 23 et 24, la tôle 15 restant immobile entre ces dernières jusqu'à son retrait à l'aide de la poignée 16 une fois le papier 12 recouvert de chocolats 9.

A cet effet, un moyen 30 exerçant une pression sur le papier pour amorcer son déplacement. Ce moyen 30 est constitué dans le cas présent par une barre lourde, par exemple en métal, ayant une longueur au moins égale à la largeur du papier 12. Ainsi, le poids de la barre 30 comprimant le papier 20 contre les courroies 23 et 24 permet à ces dernières d'entraîner ledit papier avec les chocolats enrobés 9 posés dessus, au-dessus de la tôle 15.

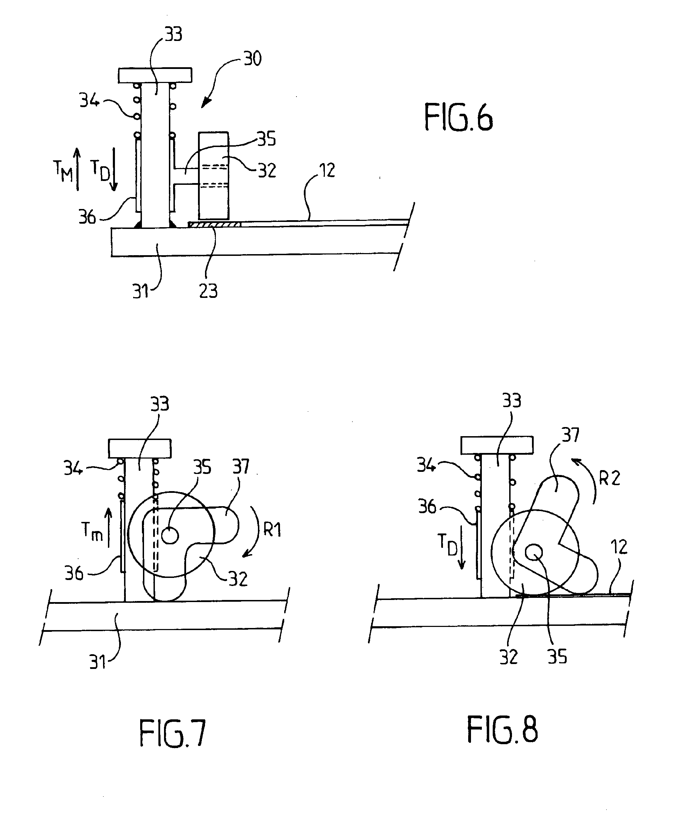

Une variante de réalisation est illustrée sur les figures 6 à 8. Dans cette variante, le moyen de pression 30 est constitué par une plaque 31 dont la largeur dépasse la distance séparant les bords extérieurs 23b et 24b des courroies 23 et 24. Une tige verticale 33 à section carrée est fixée à cette plaque (par exemple visée ou soudée) et supporte un galet presseur 32 surplombant la courroie 23. Le galet 32 est monté en rotation sur un axe 35 lui-même solidaire d'un coulisseau vertical 36 pouvant monter ou descendre le long de la tige 33.

En relevant le coulisseau 36 selon la flèche Tm, l'utilisateur remonte le galet presseur 32 et peut ainsi passer le papier 12 dessous avant de laisser un ressort de rappel élastique 34 (ressort de compression) replacer le galet 32 vers le bas (flèche TD) afin qu'il prenne en sandwich ledit papier 12 avec la courroie correspondante 23. Bien entendu la plaque 31 est munie d'un second système identique pour la courroie 24.

Afin de faciliter le relevage de chaque galet, un levier articulé 37 permet de bloquer ce dernier en position remontée par appui sur la plaque 31, comme illustré par la figure 7, puis de le faire passer en position abaissée par pivotement dudit levier, comme illustré sur la figure 8.

Les avantages de la présente invention sur les solutions de l'art antérieur sont les suivantes :
- pas de problème de guidage de bande ;
- coût de réalisation réduit ;
- pas de risque d'endommager les bonbons ne glissant la tôle de ramassage 15 sous le papier 12 car elle est déjà en place ;
- gain de temps car la tôle est déjà en place, bien positionnée entre les courroies, et facile à saisir grâce à sa poignée.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, les longerons 2 et 11 peuvent ne former qu'une seule pièce continue de manière à créer une structure unitaire d'un bout à l'autre de la chaîne de fabrication. La structure telle que représentée sur la figures a l'avantage d'être démontable au niveau du dispositif d'entraînement du support plan de faible épaisseur.

Le papier paraffiné peut être remplacé par d'autres supports flexibles de faible épaisseur, par exemple un film plastique ou rhodoïd.

Les courroies crantées 23 et 24 peuvent être remplacées par des courroies plates ou trapézoïdales

## Revendications

1. Dispositif d'entraînement et de déplacement (10) d'un support plan flexible de faible épaisseur (12) destiné à récupérer et transporter des confiseries (9) à base de chocolat sorties d'une installation d'enrobage (1), ledit dispositif (10) comportant un châssis (11) de réception d'une tôle rigide amovible (15), et des moyens (20) pour entraîner le support plan de faible épaisseur (12) en translation au-dessus de ladite tôle (15), **caractérisé en ce que** :
- lesdits moyens d'entraînement (20) comportent deux courroies sans fin (23, 24) parallèles entre elles et disposées latéralement sur le châssis (11), lesdites courroies (23, 24) présentant chacune un bord intérieur (23a, 24a) et un bord extérieur (23b, 24b),
- la tôle (15) présente une largeur inférieure à la distance séparant les bords intérieurs (23a, 24a) des courroies (23, 24), de manière à pouvoir être placée entre ces dernières, et
- le support plan de faible épaisseur (12) présente une largeur constante sensiblement égale à la distance séparant les bords extérieurs (23b, 24b) des courroies et supérieure à la distance séparant leurs bords intérieurs (23a, 24a), de sorte que ledit support (12) reste en contact en permanence avec lesdites courroies (23, 24) qui entraînent ce dernier pour le déplacer longitudinalement le long du châssis (11).

2. Dispositif selon la revendication 1, **caractérisé en ce que** le support plan de faible épaisseur (12) est une feuille de papier enroulée autour d'un rouleau (13) accroché sous le châssis (11) et tournant à la même vitesse que les courroies (23, 24), en synchronisation avec celles-ci.

3. Dispositif selon la revendication 1 ou la revendication 2, **caractérisé en ce que** les courroies (23, 24) sont crantés sur leur face interne respective et montées chacune sur deux engrenages de tension et d'entraînement (21, 22) solidaires chacun de deux axes parallèles s'étendant transversalement au châssis et à la direction longitudinale de déplacement du support plan de faible épaisseur.

4. Dispositif selon l'une quelconque des revendications précédentes, **caractérisé en ce que** la tôle (15) présente une poignée (16) pour son positionnement entre les courroies (23, 24) et son retrait avec une portion du support plan de faible épaisseur (12) une fois découpé et recouvert de confiseries enrobées (9).

5. Dispositif selon l'une quelconque des revendications précédentes, **caractérisé en ce qu'**il comporte des montants transversaux (17) s'étendant transversalement au châssis (11) pour supporter la tôle (15).

6. Dispositif selon l'une quelconque des revendications précédentes, **caractérisé en ce qu'**il est également pourvu d'un moyen (30) exerçant une pression sur le support plan de faible épaisseur (12) pour presser ce dernier sur les courroies (23, 24) durant tout son déplacement.

7. Dispositif selon la revendication 6, **caractérisé en ce que** le moyen de pression (30) est constitué par un poids posé directement sur le support plan de faible épaisseur (12) et présentant une longueur au moins égale à la distance séparant les bords extérieurs (23b, 24b) des courroies (23, 24).

8. Dispositif selon la revendication 6, **caractérisé en ce que** le moyen de pression (30) comporte deux galets presseurs (32) surplombant chacun une courroie (23, 24) et reliés respectivement à un moyen de mise sous contrainte (34) tel qu'un ressort de compression.

9. Dispositif selon la revendication 8, **caractérisé en ce que** les galets (32) sont montés chacun sur un support vertical (33) et sont articulés par rapport à ce dernier sur un levier (37) pour passer d'une position relevée sans contact avec le support plan de faible épaisseur (12) à une position abaissée pour prendre ledit support (12) en sandwich avec les courroies (23, 24).

10. Machine (1) pour l'enrobage de confiseries à base de chocolat comportant un dispositif (10) d'entraînement d'un support plan de faible épaisseur (12) selon l'une quelconque des revendications précédentes.

## Patentansprüche

1. Vorrichtung (10) zum Antreiben und Bewegen eines ebenen, flexiblen, dünnen Trägers (12), der dazu bestimmt ist, aus einer Ummantelungsanlage (1) austretende Süßwaren (9) auf Schokoladenbasis zu sammeln und zu transportieren, wobei die Vorrichtung (10) einen Rahmen (11) zur Aufnahme eines entfernbaren starren Blechs (15), und Mittel (20) zum translationsmäßigen Antreiben des ebenen, dünnen Trägers (12) über dem Blech (15) umfasst, **dadurch gekennzeichnet, dass**
- die Antriebsmittel (20) zwei zueinander parallele Endlosriemen (23, 24) umfassen, die seitlich am Rahmen (11) angeordnet sind, wobei besagte Riemen (23, 24) jeweils einen inneren Rand (23a, 24a) und einen äußeren Rand (23b, 24b) aufweisen,
- das Blech (15) eine Breite aufweist, die geringer als der Abstand zwischen den inneren Rändern (23a, 24a) der Riemen (23, 24) ist, so dass es zwischen Letztere platziert werden kann, und
- der ebene, dünne Träger (12) eine konstante Breite aufweist, die dem Abstand zwischen den äußeren Rändern (23b, 24b) der Riemen im Wesentlichen entspricht und größer als der Abstand zwischen ihren inneren Rändern (23a, 24a) ist, so dass der Träger (12) mit den Riemen (23, 24), die diesen antreiben, um ihn in Längsrichtung entlang dem Rahmen (11) zu bewegen, permanent in Kontakt bleibt.

2. Vorrichtung nach Anspruch 1, **dadurch gekennzeichnet, dass** der ebene, dünne Träger (12) ein um eine Rolle (13) aufgerolltes Blatt Papier ist, wobei die Rolle (13) unter dem Rahmen (11) hängt und sich mit derselben Geschwindigkeit wie die Riemen (23, 24) und synchron mit ihnen dreht.

3. Vorrichtung nach Anspruch 1 oder 2, **dadurch gekennzeichnet, dass** die Riemen (23, 24) an ihrer jeweiligen Innenfläche gezahnt und jeweils auf zwei Spann- und Antriebsgetrieben (21, 22) montiert sind, die jeweils fest mit zwei parallelen Achsen verbunden sind, die sich quer zum Rahmen und zur Längsbewegungsrichtung des ebenen, dünnen Trägers erstrecken.

4. Vorrichtung nach einem der vorhergehenden Ansprüche, **dadurch gekennzeichnet, dass** das Blech (15) einen Griff (16) aufweist, damit es zwischen den Riemen (23, 24) positioniert und mit einem Teil des ebenen, dünnen Trägers (12) zurückgezogen werden kann, sobald dieser abgeschnitten und mit ummantelten Süßwaren (9) bedeckt ist.

5. Vorrichtung nach einem der vorhergehenden Ansprüche, **dadurch gekennzeichnet, dass** sie Querstützen (17) umfasst, die sich zum Stützen des Blechs (15) quer zum Rahmen (11) erstrecken.

6. Vorrichtung nach einem der vorhergehenden Ansprüche, **dadurch gekennzeichnet, dass** sie ferner mit einem Mittel (30) versehen ist, das einen Druck auf den ebenen, dünnen Träger (12) ausübt, um Letzteren während seiner Bewegung auf die Riemen (23, 24) zu drücken.

7. Vorrichtung nach Anspruch 6, **dadurch gekennzeichnet, dass** das Druckmittel (30) aus einem direkt auf dem ebenen, dünnen Träger (12) liegenden Gewicht besteht, dessen Länge dem Abstand zwischen den äußeren Rändern (23b, 24b) der Riemen (23, 24) mindestens entspricht.

8. Vorrichtung nach Anspruch 6, **dadurch gekennzeichnet, dass** das Druckmittel (30) zwei Andrückrollen (32) umfasst, die jeweils über einem Riemen (23, 24) hängen und jeweils mit einem Belastungsmittel (34) wie einer Druckfeder verbunden sind.

9. Vorrichtung nach Anspruch 8, **dadurch gekennzeichnet, dass** die Rollen (32) jeweils an einem vertikalen Träger (33) montiert und bezüglich Letzterem an einem Hebel (37) angelenkt sind, um von einer angehobenen Position ohne Kontakt mit dem ebenen, dünnen Träger (12) in eine abgesenkte Position überzugehen, so dass der Träger (12) sandwichartig mit den Riemen (23, 24) liegt.

10. Maschine (1) zur Ummantelung von Süßwaren auf Schokoladenbasis, umfassend eine Vorrichtung (10) zum Antreiben eines ebenen, dünnen Trägers (12) nach einem der vorhergehenden Ansprüche.

## Claims

1. Device (10) for propelling and displacing a thin, flat, flexible support (12) intended to collect and transport chocolate-based confectionaries (9) output from a coating installation (1), said device (10) comprising a frame (11) for receiving a removable rigid sheet (15), and means (20) for propelling the thin, flat support (12) in a translational movement above said sheet (15), **characterised in that**:
- said propelling means (20) comprise two endless belts (23, 24) in parallel with one another and disposed laterally on the frame (11), said belts (23, 24) each having an inner edge (23a, 24a) and an outer edge (23b, 24b),
- the sheet (15) has a width smaller than the distance separating the inner edges (23a, 24a) of the belts (23, 24) so as to be able to be placed therebetween, and
- the thin, flat support (12) has a constant width substantially equal to the distance separating the outer edges (23b, 24b) of the belts and greater than the distance separating their inner edges (23 a, 24a) so that said support (12) remains permanently in contact with said belts (23, 24) which propel said support in order to displace it longitudinally along the frame (11).

2. Device as claimed in claim 1, **characterised in that** the thin, flat support (12) is a sheet of paper wound around a roll (13) hooked beneath the frame (11) and turning at the same speed as the belts (23, 24) and in synchronism therewith.

3. Device as claimed in claim 1 or claim 2, **characterised in that** the belts (23, 24) are notched on their respective inner face and are each mounted on two tensioning-and propelling gears (21, 22) each fixedly attached to two parallel axles extending transversely with respect to the frame and to the longitudinal direction of displacement of the thin, flat support.

4. Device as claimed in any one of the preceding claims, **characterised in that** the sheet (15) has a handle (16) to enable it to be positioned between the belts (23, 24) and to be withdrawn with a portion of the thin, flat support (12) once cut and covered with coated confectionaries (9).

5. Device as claimed in any one of the preceding claims, **characterised in that** it comprises transverse uprights (17) extending transversely with respect to the frame (11) to support the sheet (15).

6. Device as claimed in any one of the preceding claims, **characterised in that** it is also provided with a means (30) exerting pressure on the thin, flat support (12) in order to press the latter onto the belts (23, 24) throughout its displacement.

7. Device as claimed in claim 6, **characterised in that** the pressing means (30) is made up of a weight placed directly on the thin, flat support (12) and being of a length at least equal to the distance separating the outer edges (23b, 24b) of the belts (23, 24).

8. Device as claimed in claim 6, **characterised in that** the pressing means (30) comprises two pressing rollers (32) each overhanging a belt (23, 24) and connected respectively to a constrained means (34) such as a compression spring.

9. Device as claimed in claim 8, **characterised in that** the rollers (32) are each mounted on a vertical support (33) and are articulated with respect thereto on a lever (37) so as to pass from a raised position out of contact with the thin, flat support (12) to a lowered position in order to sandwich said support (12) with the belts (23, 24).

10. Machine (1) for coating chocolate-based confectionaries comprising a device (10) for propelling a thin, flat support (12) as claimed in any one of the preceding claims.
